# EUROPÄISCHE PATENTSCHRIFT

(11) **EP 1 253 304 B1**
(45) Veröffentlichungstag und Bekanntmachung des Hinweises auf die Patenterteilung: **20.06.2007**
(21) Anmeldenummer: 02008362.2
(22) Anmeldetag: 12.04.2002
(51) Int. Cl.: F02B 1/04, F02B 43/00, F02F 3/26, F02F 1/42

(54) **Fremdgezündete Brennkraftmaschine mit mindestens einer Zündeinrichtung pro Zylinder**
Spark ignition engine with at least one ignition device per cylinder
Moteur avec allumage à étincelle avec au moins une bougie par cylindre

(30) Priorität: 25.04.2001 AT 6642001
(43) Veröffentlichungstag der Anmeldung: 30.10.2002
(73) Patentinhaber: GE Jenbacher GmbH & Co OHG, 6200 Jenbach (AT)
(72) Erfinder: Gruber, Friedrich, 6283 Hippach (AT)
(74) Vertreter: Torggler, Paul Norbert

(56) Entgegenhaltungen:
- EP-A- 0 990 779
- DE-A- 1 913 115
- DE-A- 19 730 842
- US-A- 4 751 902

## Beschreibung

Die Erfindung betrifft eine fremdgezündete Brennkraftmaschine, insbesondere Ottogasmotor, mit mindestens einer Zündeinrichtung pro Zylinder, wobei mindestens ein Kolben eine Mulde im Kolbenboden aufweist, gemass Anspruch 1,1. Teil (Vergleiche mit US-A-4751902, Figur 3).

Brennkraftmaschinen mit derartigen Kolben sind bereits bekannt, wobei die Mulde teilweise Topf- oder Wannenform (Hyronenbrennraum) aufweisen kann. Sie kann mittig oder exzentrisch im Kolben untergebracht sein. Darüber hinaus sind aus der EP 0 598 941 A1 und aus der EP 0 299 747 A2 auch von der einfachen Topf- oder Wannenform abweichend ausgebildete Kolbenmulden bekannt. Aufgabe einer solchen Mulde ist es, die motorische Verbrennung zu verbessern, insbesondere eine sehr schnelle, stabile und klopffeste Verbrennung zu erzielen. Dies kann nur dadurch erreicht werden, daß eine optimale Verwirbelung bzw. Strömungsgeschwindigkeit im Bereich des Zündortes der Zündkerze sichergestellt wird. Hierbei ist darauf zu achten, daß bei zu großen Strömungsgeschwindigkeiten im Bereich des Zühdortes der Zündfunke ausgeblasen wird und bei zu kleinen Strömungsgeschwindigkeiten im Bereich des Zündortes die Verbrennung zu langsam und zu schleppend von statten geht. Bei den bereits bekannten Brennkraftmaschinen mit Mulden im Kolbenboden nach dem Stand der Technik wird die Sicherstellung einer optimalen Strömungsgeschwindigkeit im Bereich des Zündortes nur unzureichend realisiert.

Aufgabe der vorliegenden Erfindung ist es somit eine Mulde im Kolbenboden derart auszugestalten, daß die oben erwähnten Nachteile des Standes der Technik beseitigt sind und eine optimale und schnelle Verbrennung im Brennraum von fremdgezündeten Brennkraftmaschinen sichergestellt wird.

Dies wird erfindungsgemäß erreicht, mit den Merkmalen gemäß Anspruch 1.

Durch die erfindungsgemäße Ausbildungsform der Mulde im Kolbenboden wird erreicht, daß die Strömungsgeschwindigkeit am Zündort im optimalen Bereich (zwischen ca. 4 m/sec und 6 m/sec) liegt. Hierdurch wird somit sichergestellt, daß der Zündfunke am Zündort weder durch zu hohe Strömungsgeschwindigkeiten ausgeblasen wird, noch eine zu langsame Verbrennung des Brennstoff-Luftgemisches durch zu geringe Strömungsgeschwindigkeiten am Zündort stattfindet. Durch die erfindungsgemäße Sicherstellung einer optimalen Strömungsgeschwindigkeit am Zündort wird eine sehr schnelle Verbrennung des Brennstoff-Luftgemisches im gesamten Brennraum erreicht, wie sie sonst nur bei selbstzündenden Brennkraftmaschinen (z.B. Dieselmotoren) bekannt ist.

Eine besonders günstige Ausführungsform sieht hierbei vor, daß die Mulde in einer Draufsicht auf den Kolbenboden eine nicht-konvexe Form aufweist. Hierbei bezieht sich die Formulierung "nicht-konvex" auf die Tatsache, daß in einer Draufsicht auf den Kolbenboden nicht alle Verbindungslinien zwischen zwei beliebigen Punkten auf dem Umfang der Form der erfindungsgemäßen Mulde innerhalb der Mulde verlaufen.

Günstige Varianten der erfindungsgemäßen Mulde sind hierbei dadurch gekennzeichnet, daß die Mulde in einer Draufsicht auf den Kolbenboden über einen Winkelbereich von 200° bis 250°, vorzugsweise von 220° bis 230°, eine im wesentlichen kreisförmige Umfangsform, vorzugsweise mit dem Mittelpunkt der Kolbenkreisfläche als Kreismittelpunkt, aufweist.

Weitere günstige Ausführungsformen sehen vor, daß die Mulde in einer Draufsicht auf den Kolbenboden eine Einbuchtung aufweist. Hierbei ist es günstig, daß die Einbuchtung sich in einer Draufsicht auf den Kolbenboden über einen Winkelbereich von 80° bis 130°, vorzugsweise von 100° bis 110° erstreckt. Darüber hinaus ist es günstig, daß sich die Einbuchtung in einer Draufsicht auf den Kolbenboden gesehen über eine maximale Ausdehnung von 25 % bis 50 %, vorzugsweise von 35 % bis 40 % des größten Durchmessers der Mulde in das Innere der Mulde hinein erstreckt.

Wichtig ist darüber hinaus, daß der Zündort der Zündeinrichtung in einer günstigen Lage bezüglich der Mulde angeordnet ist. Die Erfindung sieht dabei vor, daß mindestens eine Zündeinrichtung einen Zündort aufweist, wobei der Zündort in einer Projektion auf die Draufsicht auf den Kolbenboden im wesentlichen auf der Symmetrieachse der Mulde und im wesentlichen im Kreismittelpunkt des kreisförmigen Bereichs der Umfangsform der Mulde liegt.

Bezüglich der Anordnung der erfindungsgemäßen Mulde in Relation zu den Ein- und Auslaßventilen des Zylinders der Brennkraftmaschine ist es günstig, daß in einer Draufsicht auf den Kolbenboden die Symmetrieachsen der Anordnung der Einund Auslaßventilen einen von 0°, 45° und 90° abweichenden spitzen Winkel zur Symmetrieachse der Mulde einnehmen. Durch diese Anordnung wird erreicht, daß eine asymmetrische Lage der erfindungsgemäßen Mulde zu den bevorzugten Strömungsrichtungen des durch die Ein- und Auslaßventile ein- und ausströmende Brennstoff-Luftgemisch vorliegt. Dies ist wiederum besonders günstig zum Erreichen einer optimalen Strömungsgeschwindigkeit des Brennstoff-Luftgemisches und einer optimalen Verwirbelung des Brennstoff-Luftgemisches am Zündort.

Um eine ausreichende Kühlung des Kolbens mit einer erfindungsgemäßen Mulde zu erreichen, ist es besonders günstig, daß ein Kühlkanal im die Mulde umgebenden Material im Kolben angeordnet ist.

Günstige Ausführungsformen sehen darüber hinaus vor, daß die in einer Draufsicht auf den Kolbenboden gesehene Form der Mulde sich im wesentlichen über die volle Tiefe der Mulde erstreckt.

Weitere Vorteile und Einzelheiten der Erfindung werden anhand der nachfolgenden Figurenbeschreibung näher erläutert. Dabei zeigt:
Fig. 1 eine schematische Darstellung eines fremdgezündeten Ottogasmotors,
Fig. 2 eine Draufsicht auf einen Kolbenboden mit erfindungsgemäßer Mulde mit Projektionen der Zündeinrichtung und der Ventile und
Fig. 3 eine Seitenansicht eines Kolbens mit erfindungsgemäßer Mulde.

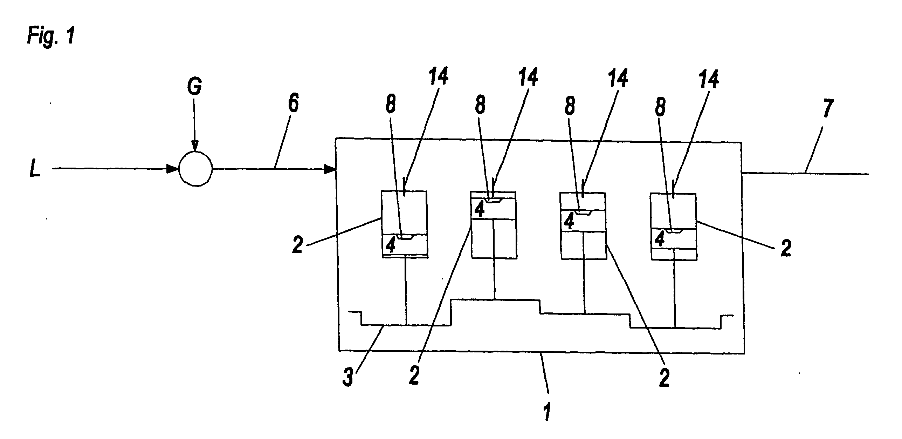

In Fig. 1 ist schematisch ein Ottogasmotor 1 dargestellt. Dieser weist Zylinder 2 auf, in denen Kolben 4 mit erfindungsgemäßen Mulden 8 beweglich gelagert sind. Das Brenngas G - Luft L - Gemisch wird durch die Brenngas-Luft-Gemischzuleitung 6 den einzelnen Zylindern 2 zugeführt, strömt durch die Ventile (hier nicht dargestellt) in die Brennräume der Zylinder 2 ein und wird dort verdichtet und anschließend durch die Zündkerzen 14 gezündet. Die dadurch entstehende Bewegung der Kolben 4 wird auf eine Antriebswelle 3 übertragen. Die bei der Verbrennung des Brenngas-Luftgemisches in den Zylindern 2 entstehenden Abgase verlassen die Zylinder durch die Auslaßventile (hier nicht dargestellt) und verlassen anschließend den Motor durch die Abgasleitung 7.

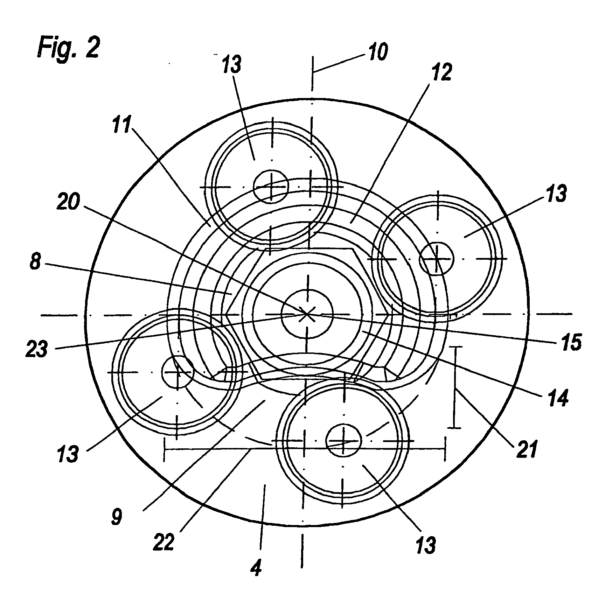

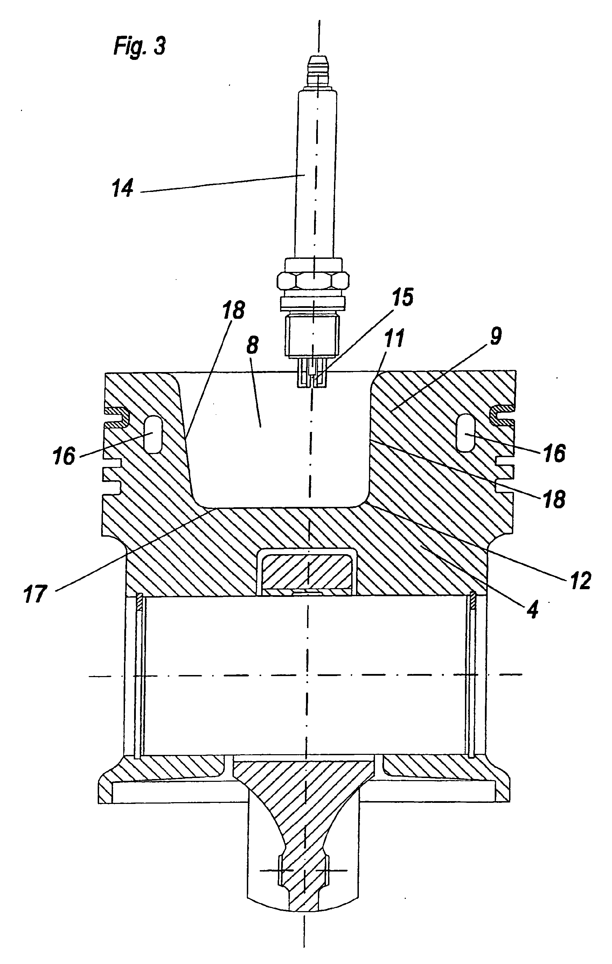

Fig. 2 zeigt eine erfindungsgemäße herzförmige Mulde 8 in einer Draufsicht auf den Kolbenboden des Kolbens 4. Die herzförmige Mulde 8 weißt hierbei eine Einbuchtung 9 und eine Symmetrieachse 10 auf. Die abgerundeten Bereiche an der Oberkante 11 und der Unterkante 12 der Mulde sind in Fig. 3 detailliert dargestellt. Die in Fig. 2 in einer Draufsicht dargestellte Mulde weist über weite Bereiche (über einen Winkelbereich von ca. 226°) eine kreisförmige Form auf. Die Einbuchtung 9 erstreckt sich in einem Winkelbereich von 104°. Die maximale Ausdehnung 21 der Einbuchtung 9 erreicht ca. 36 % des maximalen Durchmessers 22 der Mulde. Die Ventile 13 sowie die Zündeinrichtung (hier eine Zündkerze) 14 mit dem Zündort 15 sind hier in einer Projektion auf den Kolbenboden dargestellt. Hierbei ist zunächst zu erkennen, daß keine der Symmetrieachsen, welche durch die Ventilanordnung gelegt werden können mit der Symmetrieachse der herzförmigen Mulde zusammenfällt. Darüber hinaus ist dargestellt, daß die Projektion des Zündortes 15 sowohl auf der Symmetrieachse 10 der herzförmigen Mulde 8 wie auch auf dem Kreismittelpunkt 23 des kreisförmigen Bereichs der Umfangsform der Mulde 8 zu liegen kommt. Durch diese relative Lage zwischen Mulde 8 und Zündort 15 wird eine besonders günstige Strömungsgeschwindigkeit des Brenngas-Luftgemisches am Zündort 15 wie auch eine günstige Verwirbelung des Brenngas-Luftgemisches im gesamten Mulden- und Brennraum erreicht. Die hierbei am Zündort 15 erreichten Strömungsgeschwindigkeiten liegen im optimalen Bereich zwischen 4 und 6m/sec.

Fig. 3 zeigt eine Seitenansicht auf einen Schnitt durch den Kolben 4 mit der erfindungsgemäßen Mulde 8 und deren Einbuchtung 9. Des weiteren ist die Zündkerze 14 mit dem Zündort 15 dargestellt. Um die Mulde herum ist in den Kolben 4 ein Kühlkanal 16 zur Kühlung des Kolbens eingearbeitet. Hierbei ist die Form der Mulde 8 die Ausbildung des Kühlkanals 16 so aufeinander abgestimmt, daß in jedem Bereich des Kolbens 4 ausreichende Wandstärken zur Garantie der benötigten Stabilität des Kolbens verbleiben.

Die Ventile 13 sind in Fig. 3 nicht dargestellt. Fig. 3 zeigt, daß die Wände 18 und 19 der Mulde mehrere senkrecht und der Muldenboden 17 im wesentlichen horizontal in diesem Ausführungsbeispiel ausgebildet ist. Die horizontale Querschnittsform der Mulde 8 bleibt somit vorzugsweise über die volle Tiefe der Mulde 8 im wesentlichen gleich. Die Mulde 8 kann grundsätzlich als gesonderter Einsatz ausgeführt sein. Günstiger ist jedoch eine einteilige Ausbildung mit dem übrigen Kolben, wobei der Kolbenboden 24 stellenweise nach innen gezogen ist, und so die Mulde 8 bildet.

Durch die in den Fig. 2 und 3 gezeigte Ausführungsform einer erfindungsgemäßen Mulde 8 kann eine sehr schnelle, stabile und klopffeste Verbrennung erzielt werden, wobei man den erfindungsgemäße Mulde vorteilhaft mit einer in Fig. 2 dargestellten Position des Zündortes 15 sowie mit einem im Zylinderkopf untergebrachten Drall erzeugenden Einlaßkanal kombiniert.

## Patentansprüche

1. Fremdgezündete Brennkraftmaschine, insbesondere Ottogasmotor, mit mindestens einer Zündeinrichtung sowie einer Brennstoff-Luft-Gemischzuleitung pro Zylinder, wobei mindestens ein Kolben (4) eine Mulde (8) im Kolbenboden aufweist, wobei die Mulde (8) in einer Draufsicht auf den Kolbenboden einen Kreisförmigen Umfangsbereich und eine von einer Kreisform zumindest bereichsweise abweichende im wesentlichen herzförmige Form aufweist, wobei die Form der Mulde (8) in einer Draufsicht auf den Kolbenboden genau eine Symmetrieachse (10) aufweist und der Zündort (15) der Zündeinrichtung (14) in einer Projektion auf die Draufsicht auf den Kolbenboden im wesentlichen auf der Symmetrieachse (10) der Mulde (8), liegt, **dadurch gekennzeichnet, dass** die Zündeinrichtung (14) im wesentlichen im Kreismittelpunkt (23) des kreisförmigen Bereichs der Umfangsform der Mulde liegt.

2. Fremdgezündete Brennkraftmaschine nach Anspruch 1, **dadurch gekennzeichnet, daß** die Mulde (8) in einer Draufsicht auf den Kolbenboden eine nicht-konvexe Form aufweist.

3. Fremdgezündete Brennkraftmaschine nach Anspruch 1 oder 2, **dadurch gekennzeichnet, daß** die Mulde (8) in einer Draufsicht auf den Kolbenboden über einen Winkelbereich von 200° bis 250°, vorzugsweise von 220° bis 230°, eine im wesentlichen kreisförmige Umfangsform, vorzugsweise mit dem Mittelpunkt (20) der Kolbenkreisfläche als Kreismittelpunkt (23), aufweist.

4. Fremdgezündete Brennkraftmaschine nach einem der Ansprüche 1 bis 3, **dadurch gekennzeichnet, daß** die Mulde (8) in einer Draufsicht auf den Kolbenboden eine Einbuchtung (9) aufweist.

5. Fremdgezündete Brennkraftmaschine nach Anspruch 4, **dadurch gekennzeichnet, daß** die Einbuchtung (9) sich in einer Draufsicht auf den Kolbenboden über einen Winkelbereich von 80° bis 130°, vorzugsweise von 100° bis 110°, erstreckt. Kolbenboden im wesentlichen auf der Symmetrieachse (10) der Mulde (8) und/oder im wesentlichen im Kreismittelpunkt (23) des kreisförmigen Bereichs der Umfangsform der Mulde liegt.

6. Fremdgezündete Brennkraftmaschine nach einem der Ansprüche 1 bis 5, **dadurch gekennzeichnet, daß** in einer Draufsicht auf den Kolbenboden die Symmetrieachsen der Anordnung der Ein- und Auslaßventile (13) einen von 0°, 45° und 90° abweichenden spitzen Winkel zur Symmetrieachse (10) der Mulde (8) einnehmen.

7. Fremdgezündete Brennkraftmaschine nach einem der Ansprüche 1 bis 6, **dadurch gekennzeichnet, daß** ein Kühlkanal (16) im die Mulde (8) umgebenden Material im Kolben (4) angeordnet ist.

8. Fremdgezündete Brennkraftmaschine nach einem der Ansprüche 1 bis 7, **dadurch gekennzeichnet, daß** die in einer Draufsicht auf den Kolbenboden gesehene Form der Mulde (8) sich im wesentlichen über die volle Tiefe der Mulde (8) erstreckt.

## Claims

1. A spark ignition internal combustion engine, in particular an Otto-cycle gas engine, with at least one ignition device and a fuel gas-air mixture feed duct per cylinder, wherein at least one piston (4) has a recess (8) in the piston head, and wherein the recess (8) in plan view onto the piston head has a circular-shaped outline region and a substantially heart-shaped region which differs at least in a region-wise manner from a circular shape, wherein the shape of the recess (8) in a plan view onto the piston head has precisely one axis of symmetry (10) and the ignition location (15) of the ignition device (14) in projection onto the plan view onto the piston head lies substantially on the axis of symmetry (10) of the recess (8), **characterized in that** the ignition device (14) lies substantially at the center (23) of the circle of the circular region of the peripheral shape of the recess (8).

2. A spark ignition internal combustion engine according to claim 1, **characterized in that** the recess (8) is of a non-convex shape in a plan view on to the piston head.

3. A spark ignition internal combustion engine according to claim 1 or 2, **characterized in that** in a plan view on to the piston head, the recess (8) is of a substantially circular peripheral shape over an angular region of between 200° and 250°, preferably between 220° and 230°, preferably with the center (20) of the circular area of the piston as a center of the circle (23).

4. A spark ignition internal combustion engine according to one of claims 1 to 3 **characterized in that** in a plan view onto the piston head, the recess (8) has an inwardly extending portion (9).

5. A spark ignition internal combustion engine according to claim 4, **characterized in that** in a plan view on to the piston head, the inwardly extending portion (9) extends over an angular region of between 80° and 130°, preferably between 100° and 110°.

6. A spark ignition internal combustion engine according to one of claims 1 to 5, **characterized in that** in a plan view on to the piston head, the axes of symmetry of the arrangement of the inlet and exhaust valves (13) assume an acute angle differing from 0°, 45° and 90°, relative to the axis of symmetry (10) of the recess (8).

7. A spark ignition internal combustion engine according to one of claims 1 to 6, **characterized in that** a cooling duct (16) is arranged in the piston (4) in the material surrounding the recess (8).

8. A spark ignition internal combustion engine according to one of claims 1 to 7, **characterized in that** the shape of the recess (8), as viewed in a plan view onto the piston head, extends substantially over the full depth of the recess (8).

## Revendications

1. Moteur à allumage commandé, en particulier moteur à gaz de type Otto, comportant par cylindre au moins un dispositif d'allumage, ainsi qu'une conduite d'admission du mélange carburant-air, au moins un piston (4) comportant dans son fond une cavité (8), la cavité (8) ayant, sur une vue en élévation du fond du piston, une zone périphérique circulaire et une forme sensiblement en forme de coeur s'écartant au moins par zones d'une forme circulaire, la forme de la cavité (8) ayant, sur une vue en élévation du fond du piston, un axe de symétrie (10) et le lieu d'allumage (15) du dispositif d'allumage (14), dans une projection sur la vue en élévation du fond du piston, étant situé sensiblement sur l'axe de symétrie (10) de la cavité (8), **caractérisé en ce que** le dispositif d'allumage (14) se situe sensiblement au centre (23) de la zone circulaire de la forme périphérique de la cavité.

2. Moteur à allumage commandé selon la revendication 1, **caractérisé en ce que** la cavité (8), sur une vue en élévation du fond du piston, possède une forme non convexe.

3. Moteur à allumage commandé selon la revendication 1 ou 2, **caractérisé en ce que** la cavité (8), sur une vue en élévation du fond du piston, possède, sur une zone angulaire de 200° à 250°, de préférence de 220° à 230°, une forme périphérique sensiblement circulaire, ayant pour centre (23) de préférence le centre (20) de la surface circulaire du piston.

4. Moteur à allumage commandé selon l'une quelconque des revendications 1 à 3, **caractérisé en ce que** la cavité (8), sur une vue en élévation du fond du piston, comporte un creux (9).

5. Moteur à allumage commandé selon la revendication 4, **caractérisé en ce que** le creux (9), sur une vue en élévation du fond du piston, s'étend sur une zone angulaire de 80° à 130°, de préférence 100° à 110°.

6. Moteur à allumage commandé selon l'une quelconque des revendications 1 à 5, **caractérisé en ce que**, sur une vue en élévation du fond du piston, les axes de symétrie de l'agencement des soupapes d'admission et d'échappement (13) délimitent avec l'axe de symétrie (10) de la cavité (8) un angle aigu différent de 0°, 45° et 90°.

7. Moteur à allumage commandé selon l'une quelconque des revendications 1 à 6, **caractérisé en ce qu'**un conduit de refroidissement (16) est réalisé dans le piston (4) dans le matériau entourant la cavité (8).

8. Moteur à allumage commandé selon l'une quelconque des revendications 1 à 7, **caractérisé en ce que** la forme de la cavité (8), observée sur une vue en élévation du fond du piston, s'étend sensiblement sur toute la profondeur de la cavité (8).
